# EUROPÄISCHE PATENTSCHRIFT

(11) **EP 3 616 868 B1**
(45) Veröffentlichungstag und Bekanntmachung des Hinweises auf die Patenterteilung: **19.05.2021**
(21) Anmeldenummer: 19194260.6
(22) Anmeldetag: 29.08.2019
(51) Int. Cl.: B29B 7/76, B29B 7/74, B29B 7/40, B29C 39/24, B29B 7/80

(54) **MISCHVORRICHTUNG ZUM BEFÜLLEN EINER GUSSFORM MIT EINEM REAKTIONSHARZ**
MIXING DEVICE FOR FILLING A MOULD WITH A REACTIVE RESIN
DISPOSITIF DE MÉLANGE POUR LE REMPLISSAGE D'UN MOULE AVEC UNE RÉSINE RÉACTIVE

(30) Priorität: 31.08.2018 DE 102018121323
(43) Veröffentlichungstag der Anmeldung: 04.03.2020
(73) Patentinhaber: Hochtechnic GmbH, 26160 Bad Zwischenahn (DE)
(72) Erfinder: Arntjen, Frank, 26160 Bad Zwischenahn (DE)
(74) Vertreter: Jabbusch, Matthias

(56) Entgegenhaltungen:
- EP-A1- 0 333 111
- WO-A1-2013/149273
- WO-A1-2017/004637
- DE-U1-202006 007 425
- JP-A- 2006 142 500

## Beschreibung

Die Erfindung betrifft eine Vorrichtung zum Befüllen von Gussformen mit Reaktionsharzen mit einem dynamischen Mischer, dessen Mischkopf aus einem Stator und einem darin gelagerten Rotor zusammengesetzt ist, wobei der Stator im Lagerspalt gelegene Harz- und Härteraustrittsöffnungen aufweist und der Rotor am Lagerspalt gelegene Mitnehmerkammern aufweist und mit dem Stator ein Ventilgehäuse und mit dem Rotor ein im Ventilgehäuse stellbeweglich geführtes Sperrglied ausgebildet ist.

Bei bekannten Vorrichtungen dieser Art treffen eine Harzkomponente und eine Härterkomponente in den Mitnehmerkammern aufeinander und werden dort durch die vom drehenden Rotor induzierte Bewegungsenergie zu einem homogenen Reaktionsharz miteinander vermischt. Dabei ist es bekannt, die Mischleistung über eine elektronische Regelung der Rotordrehzahl zu steuern. Bei den bekannten Vorrichtungen ist der Mischkopf nach jedem Einsatz von den aushärtbaren Reaktionsharzen freizuspülen. Das Spülen der Mischköpfe erfordert jedoch regelmäßig den Einsatz von Lösungsmitteln, die den Gefahrstoffen zuzuordnen sind und deshalb in ihrer Entsorgung problematisch sind.

In der vom Carl Hanser Verlag München herausgegebenen Fachzeitschrift "Kunststoffe", Ausgabe 3/2009 ist in dem dort veröffentlichten Artikel "Beschleunigen nicht nur im Wildwasser" auf Seite 5, rechte Spalte, ein spezieller 2K-Mischkopf beschrieben, der sich nach einer Injektion selbst reinigt, so dass Wegwerfteile, wie statische Mischer und Schlauchverbindungen sowie mühselige Reinigungsschritte entfallen können. Die Selbstreinigung erfolgt dadurch, dass das Harz und der Härter zwischen den Injektionen getrennt zirkuliert werden. Aus der internationalen Anmeldeschrift WO 2017/004637 A1 ist eine Vorrichtung zum Befüllen von Gussformen mit Reaktionsharzen mittels eines dynamischen Mischers bekannt, dessen Mischkopf aus einem Gehäuse und einem darin gelagerten Rührer zusammengesetzt ist. Mit dem Gehäuse ist eine Mischkammer ausgebildet, in welcher der Rührer relativ zu einer Ausbringöffnung in Richtung seiner Drehachse verfahren werden kann. In den Patentzeichnungen ist dargestellt, dass zwischen dem Rührer und den Gehäusewandungen ein Ringspalt ausgebildet ist, und dass der Rührer ein an diesem Ringspalt gelegenes Schaufelprofil aufweist. Ein zum Mischkopf der erfindungsgemäßen Vorrichtung ähnlicher Mischkopf ist aus der deutschen Offenlegungsschrift DE 1 675 508 A bekannt. Weitere Mischköpfe sind aus den Druckschriften EP 1 666 132 A1, DE 199 61 257 A1, DE 199 27 556 A1 und DE 197 48 481 A1 bekannt.

Der Erfindung liegt deshalb die Aufgabe zugrunde, eine Vorrichtung der eingangs genannten Gattung aufzuzeigen, bei der auf einen Einsatz von Lösungsmitteln verzichtet werden kann.

Diese Aufgabe ist durch eine Vorrichtung mit den Merkmalen des Patentanspruches 1 gelöst. Vorteilhafte Weiterbildungen der Erfindung sind in den Unteransprüchen angegeben.

Die erfindungsgemäße Vorrichtung zum Befüllen von Gussformen zeichnet sich dadurch aus, dass der Rotor und der Stator die Harz- und Härteraustrittsöffnungen in wenigstens einer Sperrstellung verschließende und in wenigstens einer Zapfstellung freigebende Passflächen aufweisen. Liegen die Passflächen des Rotors in der Sperrstellung an den Passflächen des Stators an, verschließen sie sämtliche Harz- und Härteraustrittsöffnungen. Liegen die Passflächen des Rotors in der Zapfstellung beabstandet zu den Passflächen des Stators, sind sämtliche Harz- und Härteraustrittsöffnungen über die Mitnehmerkammern zur freien Atmosphäre hin geöffnet. Nach Beendigung des Befüllens einer Gussform verbleibt der Mischkopf solange an der Gussform, bis das Reaktionsharz ausgehärtet ist. Erst dann wird der Mischkopf von der Gussform abgenommen, wobei sich das in den Mitnehmerkammern verbliebene Reaktionsharz verunreinigungsfrei vom Stator ablöst und am Gussteil einen die Mitnehmerkammern abbildenden Negativabdruck hinterlässt. Ein möglicherweise zwischen den Passflächen verbleibender Schmierfilm aus Reaktionsharz ist derart dünn, dass er sich mit wenigen Drehungen des Rotors abrasiv abtragen lässt. Eine Reinigung des aus Stator und Rotor bestehenden Mischkopfes mittels Lösungsmitteln kann somit vorteilhaft entfallen.

Um zu verhindern, dass es an den Harzaustrittsöffnungen zu einer Kontamination mit Härterrestmengen oder andersherum an den Härteraustrittsöffnungen zu einer Kontamination mit Harzrestmengen kommt, sind die Harzaustrittsöffnungen in einer Harzzirkulationsleitung und die Härteraustrittsöffnungen in einer Härterzirkulationsleitung ausgebildet. Die Zirkulation bewirkt eine unendliche Verdünnung einer Fremdmenge im jeweils anderen Leitungssystem, so dass ein partielles Verkleben der Harz- und Härteraustrittsöffnungen ausgeschlossen ist.

Nach einer nächsten Weiterbildung der Erfindung ist der Lagerspalt auf der den Mitnehmerkammern abgekehrten Seite der Passflächen zu wenigstens einer Ringkammer erweitert, wobei die Ringkammer als ein Leitungsabschnitt in nur einer der beiden Zirkulationsleitungen ausgebildet ist. Mit dieser Ausgestaltung ist vorteilhaft verhindert, dass aushärtbares Reaktionsharz in den Lagerspalt und über den Lagerspalt in die Rotorlager kriechen und dort zu Verklebungen führen kann. Vorzugsweise ist die Ringkammer als Leitungsabschnitt in der Härterzirkulationsleitung ausgebildet, da handelsübliche Härter regelmäßig eine geringere Viskosität als handelsübliche Harze aufweisen und sie deshalb das Durchspülen des ringkammerartig erweiterten Lagerspaltes vereinfachen.

Nach einer besonders vorteilhaften Weiterbildung der Erfindung ist der den Rotor aufnehmende Bereich des Stators als Hohlkörper ausgebildet, in dessen Wandungen die Harz- und Härterzirkulationsleitungen ausbildende Leitungskanäle verlaufen. Mit den Leitungskanälen verzichtet die erfindungsgemäße Vorrichtung auf den Verbau empfindlicher Schlauchleitungen, so dass mit dem Mischkopf der erfindungsgemäßen Vorrichtung hohe Standzeiten erreichbar sind.

Zur Ausbildung eines spielfreien Ventilsitzes weisen die Passflächen einen konischen Verlauf auf oder sind in Form einer Übermaßpassung ausgebildet. Grundsätzlich ist es jedoch ebenso denkbar, die Passflächen in einer Radialebene quer zur Rotationsachse des Rotors auszubilden.

Nach einer anderen Weiterbildung der Erfindung weist der Rotor wenigstens im Bereich seiner Mitnehmerkammern eine konzentrisch ausgebildete Stirnflächeneinwölbung auf. Mit dieser bildet der am Gussteil vom Mischkopf zurückbleibende Negativabdruck einen vorteilhaft kleinen Oberflächenfehler aus, der je nach Eintauchtiefe des Mischkopfes in eine Gussform als Materialüberschuss oder als Materialmindermenge ausgebildet sein kann.

Vorzugsweise ist das im Ventilgehäuse stellbeweglich geführte Sperrglied ein hubbeweglich geführter Hubkolben, so dass die den Lagerspalt begrenzenden Passflächen koaxial zur Rotationsachse des Rotors ausgerichtet sind. Es liegt jedoch im Rahmen der Erfindung, das im Ventilgehäuse stellbeweglich geführte Sperrglied als drehbeweglich geführte Ventilscheibe auszubilden, so dass die den Lagerspalt begrenzenden Passflächen radial zur Rotationsachse des Rotors ausgerichtet sind.

Ein Ausführungsbeispiel der Erfindung, aus dem sich weitere erfinderische Merkmale ergeben, ist in der Zeichnung dargestellt. Es zeigen:
- Fig. 1:: einen Längsvollschnitt eines Mischkopfes für eine erfindungsgemäße Vorrichtung, dargestellt in einer Sperrstellung;
- Fig. 2:: einen Längsvollschnitt des Mischkopfes gemäß Fig. 1, dargestellt in einer Zapfstellung;
- Fig. 3:: eine perspektivische Darstellung eines Stators für einen Mischkopf gemäß den Fig. 1 und 2; und
- Fig. 4:: eine perspektivische Darstellung eines Rotors für einen Mischkopf gemäß den Fig. 1 und 2.

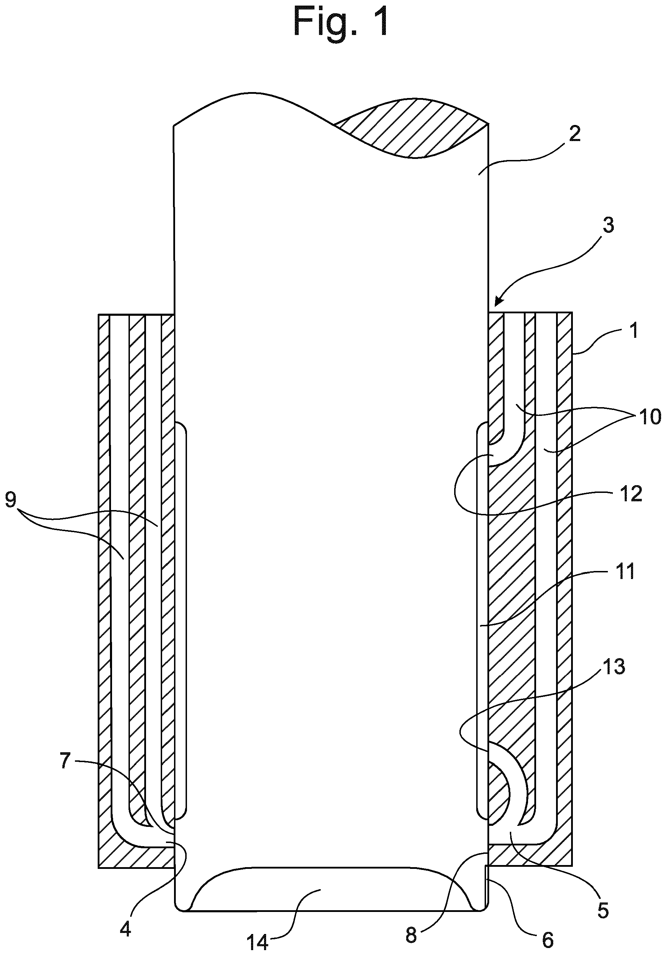

Die Fig. 1 zeigt eine erfindungsgemäße Vorrichtung zum Befüllen von Gussformen mit Reaktionsharzen, zusammengesetzt aus einem Stator 1 und einem darin gelagerten Rotor 2. Der Stator 1 weist im Lagerspalt 3 gelegene Harz- und Härteraustrittsöffnungen 4, 5 auf und der Rotor 2 weist am Lagerspalt 3 gelegene Mitnehmerkammern 6 auf. Mit dem Stator 1 ist ein Ventilgehäuse und mit dem Rotor 2 ein im Ventilgehäuse hubbeweglich geführter Ventilkolben ausgebildet. In der dargestellten Sperrstellung weisen der Rotor 2 und der Stator 1 die Harz- und Härteraustrittsöffnungen 4, 5 verschließende Passflächen 7, 8 auf. Während die Passfläche 7 eine am Rotor 2 ausgebildete äußere Mantelfläche ist, ist die Passfläche 8 eine am Stator 1 ausgebildete innere Mantelfläche, in welcher die Harzaustrittsöffnungen 4, und die Härteraustrittsöffnungen 5 angeordnet sind. Die Harzaustrittsöffnungen 4 sind in einer Harzzirkulationsleitung 9 und die Härteraustrittsöffnungen 5 in einer Härterzirkulationsleitung 10 ausgebildet. Auf der den Mitnehmerkammern 6 abgekehrten Seite der Passflächen 7, 8 ist der Lagerspalt 3 zu einer Ringkammer 11 erweitert, mit der ein Leitungsabschnitt der Härterzirkulationsleitung 10 ausgebildet ist. Zur Anbindung der Ringkammer 11 an die Härterzirkulationsleitung 10 weist diese in die Ringkammer 11 einmündende Kammeröffnungen 12, 13 auf. Der den Rotor 2 aufnehmende Bereich des Stators 1 ist als Hohlkörper ausgebildet, in dessen Wandungen die Harz- und Härterzirkulationsleitungen 9, 10 als ins Vollmaterial eingearbeitete Leitungskanäle ausgebildet sind. Die Passflächen 7, 8 weisen jeweils einen in der Zeichnung nicht dargestellten konischen Verlauf mit gleicher Konizität auf. Im Bereich seiner Mitnehmerkammern 6 weist der Rotor 2 eine konzentrisch zur Rotorachse ausgebildete Stirnflächeneinwölbung 14 auf.

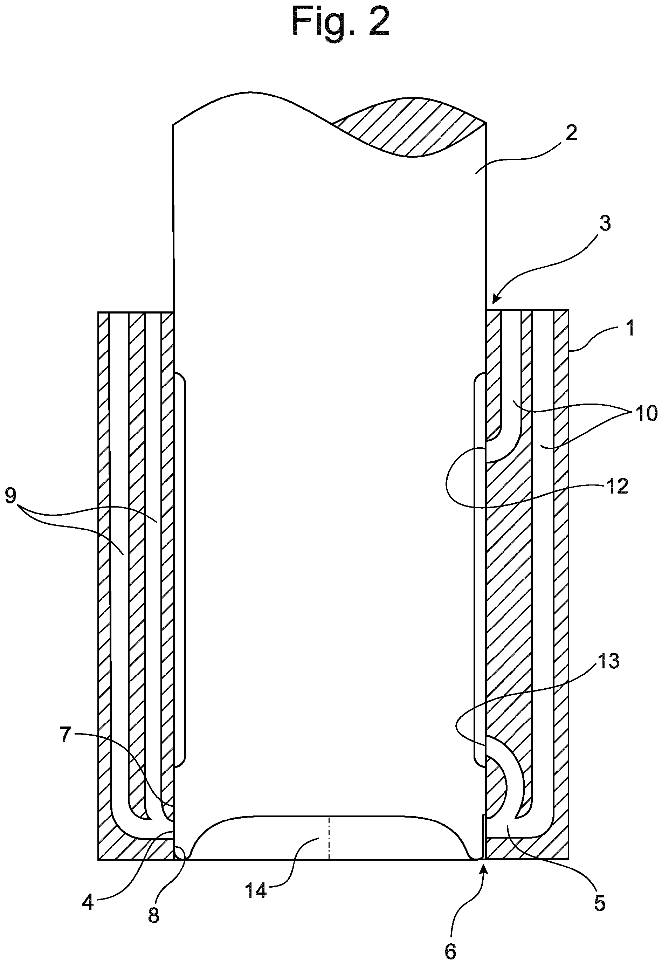

Die Fig. 2 zeigt den Mischkopf gemäß Fig. 1 in einer Zapfstellung, in welcher die Passflächen 7, 8 die Harz- und Härteraustrittsöffnungen 4, 5 freigeben, so dass diese über die Mitnehmerkammern 6 zur freien Atmosphäre hin geöffnet sind. Gleiche Bauteile sind mit gleichen Bezugszahlen versehen.

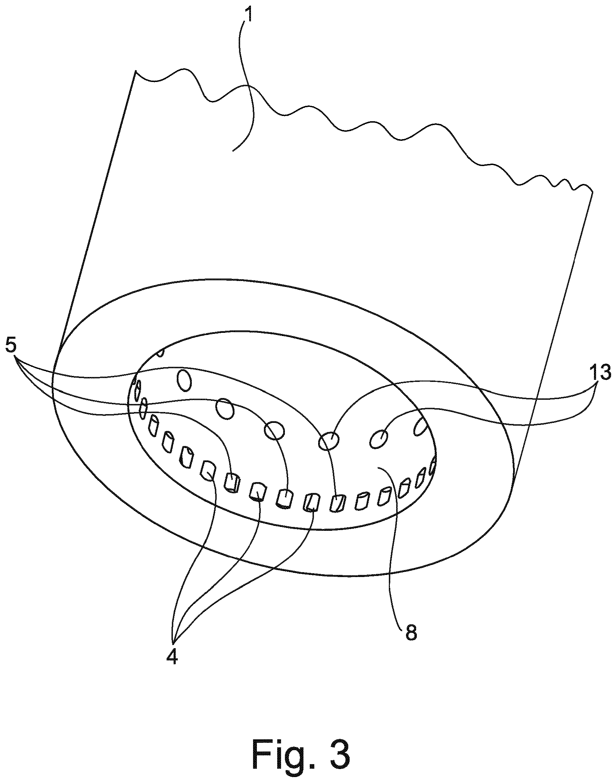

Die Fig. 3 zeigt eine perspektivische Darstellung des Stators 1 für den Mischkopf gemäß den Fig. 1 und 2. Die Fig. 3 verdeutlicht die alternierende Anordnung der Harzaustrittsöffnungen 4 und der Härteraustrittsöffnungen 5 auf einer Kreisbahn der Passfläche 8 des Stators 1. Die ebenfalls auf einer Kreisbahn in der Passfläche 8 des Stators 1 angeordneten Kammeröffnungen 13 sind über die Harzzirkulationsleitungen 9 mit den Harzaustrittsöffnungen 4 verbunden.

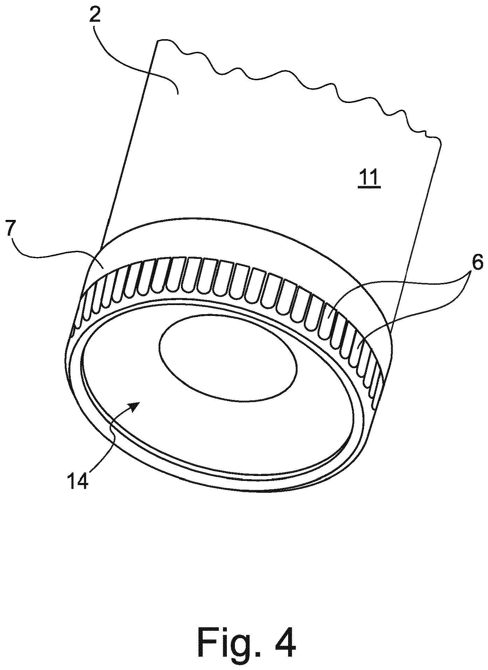

Die Fig. 4 zeigt eine perspektivische Darstellung des Stators 1 für den Mischkopf gemäß den Fig. 1 und 2. Diese Figur veranschaulicht die Ausbildung der am Rotor 2 ausgebildeten Mitnehmerkammern 6. Gleiche Bauteile sindmit gleichen Bezugszahlen versehen.

### Bezuqszahlenliste:

- 1: Stator
- 2: Rotor
- 3: Lagerspalt
- 4: Harzaustrittsöffnungen
- 5: Härteraustrittsöffnungen
- 6: Mitnehmerkammern
- 7: Passfläche
- 8: Passfläche
- 9: Harzzirkulationsleitung
- 10: Härterzirkulationsleitung
- 11: Ringkammer
- 12: Kammeröffnungen
- 13: Kammeröffnungen
- 14: Stirnflächeneinwölbung

## Patentansprüche

1. Vorrichtung zum Befüllen von Gussformen mit Reaktionsharzen mit einem dynamischen Mischer, dessen Mischkopf aus einem Stator und einem darin gelagerten Rotor zusammengesetzt ist, wobei der Stator im Lagerspalt gelegene Harz- und Härteraustrittsöffnungen aufweist und der Rotor am Lagerspalt gelegene Mitnehmerkammern aufweist, und mit dem Stator ein Ventilgehäuse und mit den Rotor ein im Ventilgehäuse stellbeweglich geführtes Sperrglied ausgebildet ist,
**dadurch gekennzeichnet,**
**dass** der Rotor (2) und der Stator (1) die Harz- und Härteraustrittsöffnungen (4, 5) in wenigstens einer Sperrstellung verschließende und in wenigstens einer Zapfstellung freigebende Passflächen (7, 8) aufweisen.

2. Vorrichtung nach Anspruch 1, **dadurch gekennzeichnet, dass** die Harzaustrittsöffnungen (4) in einer Harzzirkulationsleitung (9) und Härteraustrittsöffnungen (5) in einer Härterzirkulationsleitung (10) ausgebildet sind.

3. Vorrichtung nach Anspruch 1 oder 2, **dadurch gekennzeichnet, dass** der Lagerspalt (3) auf der den Mitnehmerkammern (6) abgekehrten Seite der Passflächen (7, 8) zu wenigstens einer Ringkammer (11) erweitert ist, und dass die Ringkammer (11) als ein Leitungsabschnitt in nur einer der beiden Zirkulationsleitungen (9, 10) ausgebildet ist.

4. Vorrichtung nach Anspruch 2 oder 3, **dadurch gekennzeichnet, dass** der den Rotor (2) aufnehmende Bereich des Stators (1) als Hohlkörper ausgebildet ist, in dessen Wandungen die Harz- und Härterzirkulationsleitungen (4, 5) ausbildendende Leitungskanäle verlaufen.

5. Vorrichtung nach einem der Ansprüche 1 bis 4, **dadurch gekennzeichnet, dass** die Passflächen (7, 8) einen konischen Verlauf aufweisen.

6. Vorrichtung nach einem der Ansprüche 1 bis 5, **dadurch gekennzeichnet, dass** der Rotor (2) wenigstens im Bereich seiner Mitnehmerkammern (6) eine konzentrisch ausgebildete Stirnflächeneinwölbung (14) aufweist.

7. Vorrichtung nach einem der Ansprüche 1 bis 6, **dadurch gekennzeichnet, dass** das im Ventilgehäuse stellbeweglich geführte Sperrglied ein hubbeweglich geführter Ventilkolben ist.

8. Vorrichtung nach einem der Ansprüche 1 bis 6, **dadurch gekennzeichnet, dass** das im Ventilgehäuse stellbeweglich geführte Sperrglied eine drehbeweglich geführte Ventilscheibe ist.

## Claims

1. Device for filling moulds with reactive resins comprising a dynamic mixer, whose mixing head is composed of a stator and a rotor mounted therein, wherein the stator has resin and curing agent outlet openings located in the bearing gap and the rotor has driver chambers located at the bearing gap, and a valve housing is formed with the stator, and a blocking element, movably guided in the valve housing, is formed with the rotor,
**characterized in that**
the rotor (2) and the stator (1) have mating surfaces (7, 8) closing the resin and curing agent outlet openings (4, 5) in at least one blocking position and releasing the resin and curing agent outlet openings in at least one tap position.

2. Device according to claim 1, **characterized in that** the resin outlet openings (4) are formed in a resin circulation line (9) and the curing agent outlet openings (5) are formed in a curing agent circulation line (10).

3. Device according to claim 1 or 2, **characterized in that** the bearing gap (3) is enlarged to at least one annular chamber (11) on the side of the mating surfaces (7, 8) facing away from the driver chambers (6), and that the annular chamber (11) is formed as a line section in only one of the two circulation lines (9, 10) .

4. Device according to claim 2 or 3, **characterized in that** the area of the stator (1) receiving the rotor (2) is designed as a hollow body, and conduit channels run in the walls thereof forming the resin and curing agent circulation lines (4, 5).

5. Device according to one of claims 1 to 4, **characterized in that** the mating surfaces (7, 8) have a conical profile.

6. Device according to one of claims 1 to 5, **characterized in that** the rotor (2) has a concentrically formed end face indentation (14) at least in the area of the driver chambers (6).

7. Device according to one of claims 1 to 6, **characterized in that** the blocking element, movably guided in the valve housing, is a valve piston guided in a lifting manner.

8. Device according to one of claims 1 to 6, **characterized in that** the blocking element, movably guided in the valve housing, is a rotatably guided valve disk.

## Revendications

1. Dispositif, destiné à remplir des moules avec des résines réactives, pourvu d'un mélangeur dynamique, dont la tête mélangeuse se compose d'un stator et d'un rotor logé dans ce dernier, le stator comportant des orifices de sortie de résine et d'agent durcisseur situés dans la fente de palier, et le rotor comportant des chambres d'entraînement situées sur la fente de palier, et avec le stator étant conçu un corps de soupape et avec le rotor étant conçu un élément de blocage guidé en étant mobile en réglage dans le corps de soupape,
**caractérisé en ce que**
le rotor (2) et le stator (1) comportent des surfaces d'ajustage (7, 8) fermant les orifices de sortie de résine et d'agent durcisseur (4, 5) dans au moins une position de blocage et les libérant dans au moins une position de soutirage.

2. Dispositif selon la revendication 1, **caractérisé en ce que** les orifices de sortie de résine (4) sont conçus dans une conduite de circulation de résine (9) et des orifices de sortie d'agent durcisseur (5) sont conçus dans une conduite de circulation d'agent durcisseur (10) .

3. Dispositif selon la revendication 1 ou 2, **caractérisé en ce que** sur le côté des surfaces d'ajustage (7, 8) qui est opposé aux chambres d'entraînement (6), la fente de palier (3) est évasée en au moins une chambre annulaire (11) et **en ce que** la chambre annulaire (11) est conçue sous la forme d'un segment de conduite dans seulement l'une des deux conduites de circulation (9, 10) .

4. Dispositif selon la revendication 2 ou 3, **caractérisé en ce que** la zone du stator (1) qui reçoit le rotor (2) est conçue sous la forme d'un corps creux dans les parois duquel s'écoulent les canaux de guidage formant les conduites de circulation de l'agent durcisseur (4, 5) .

5. Dispositif selon l'une quelconque des revendications 1 à 4, **caractérisé en ce que** les surfaces d'ajustage (7, 8) présentent un trajet conique.

6. Dispositif selon l'une quelconque des revendications 1 à 5, **caractérisé en ce qu'**au moins dans la zone de ses chambres d'entraînement (6), le rotor (2) comporte une voûte de face frontale (14) conçue de manière concentrique.

7. Dispositif selon l'une quelconque des revendications 1 à 6, **caractérisé en ce que** l'élément de blocage guidé de manière mobile en réglage dans le corps de soupape est un piston de soupape guidé de manière mobile en course.

8. Dispositif selon l'une quelconque des revendications 1 à 6, **caractérisé en ce que** l'élément de blocage guidé de manière mobile en réglage dans le corps de soupape est un disque de soupape guidé de manière mobile en rotation.
